# EUROPEAN PATENT APPLICATION

(11) **EP 2 996 381 A1**
(43) Date of publication of application: **16.03.2016**
(21) Application number: 14794791.5
(22) Date of filing: 11.04.2014
(51) Int. Cl.: H04W 28/04, H04W 28/16, H04W 36/04, H04W 36/08

(54) **HANDOVER METHOD, WIRELESS BASE STATION, AND MOBILE STATION**

(30) Priority: 09.05.2013 JP 2013099359
(71) Applicant: NTT DOCOMO, INC., Chiyoda-Ku Tokyo 100-6150 (JP)
(72) Inventor: UCHINO, Tooru, Tokyo 100-6150 (JP); TAKAHASHI, Hideaki, Tokyo 100-6150 (JP); NAGATA, Satoshi, Tokyo 100-6150 (JP); HAPSARI, Wuri Andarmawanti, Tokyo 100-6150 (JP); TAKEDA, Kazuki, Tokyo 100-6150 (JP)
(74) Representative: Hoffmann Eitle
(86) International application number: PCT/JP2014/060512
(87) International publication number: WO 2014/181636

(57) **Abstract**

This invention implements "RRC diversity" in a handover procedure between cells under different radio base stations (eNB), while considering conditions in a MAC layer. A handover method of the invention includes: a step A of notifying, by a radio base station (eNB #1), a radio base station (eNB #10) of a HARQ process; a step B of transmitting, by the radio base station (eNB #1), "HO command" to a mobile station (UE) by using a HARQ process different from the HARQ process notified to the radio base station (eNB #10) ; and a step C of transmitting, by the radio base station (eNB #10), "HO command" to the mobile station (UE) by using the HARQ process notified by the radio base station (eNB #1).

## Description

### TECHNICAL FIELD

The present invention relates to a handover method, a radio base station, and a mobile station.

### BACKGROUND ART

In LTE (Long Term Evolution), when a mobile station UE in "RRC Connected state" moves across a cell boundary, a handover procedure is to take place in order to cause the mobile station UE to perform communication always by using an appropriate cell.

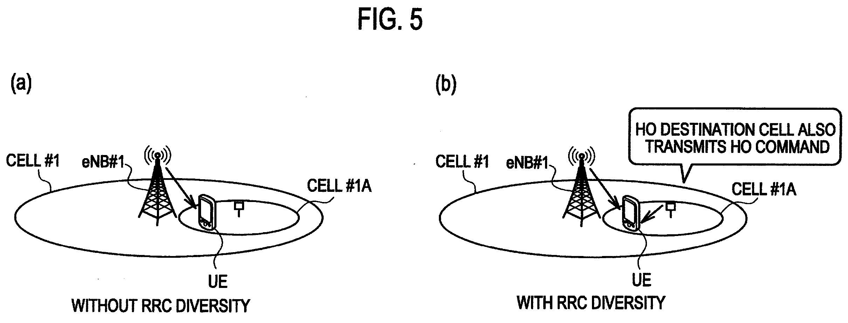

However, when the handover procedure takes place between cells using the same frequency, there is a concern that the mobile station UE cannot receive "HO command" from a handover source cell due to interference from a neighboring cell, and the handover procedure ends up in failure (see Fig. 5(a)).

Accordingly, as shown in Fig. 5(b), there has been proposed a control method (RRC diversity) configured to transmit the "HO command" not only from the handover source cell but also from a handover destination cell in order to improve a probability of reception of the "HO command" by the mobile station UE, and thus to suppress a failure in the handover procedure (see Non-patent Document 1).

Here, the "RRC diversity" can be implemented by CoMP transmission-reception (Coordinated Multi-Point transmission-reception) on a downlink. Note that the CoMP transmission-reception on the downlink is a technique for improving throughput on the downlink by transmitting either the same or different data from multiple (a plurality of) TPs (Transmission Points) to the mobile station UE.

### PRIOR ART DOCUMENT

### NON-PATENT DOCUMENT

Non-patent document 1: 3GPP Written Contributions R2-131211

### SUMMARY OF THE INVENTION

At present, the CoMP transmission-reception on the downlink can be carried out only in the cells under the same radio base station eNB.

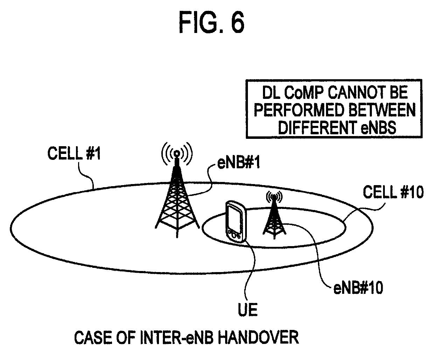

Accordingly, there is a problem that the "RRC diversity" cannot be implemented in a handover procedure between cells under different radio base stations eNB as shown in Fig. 6.

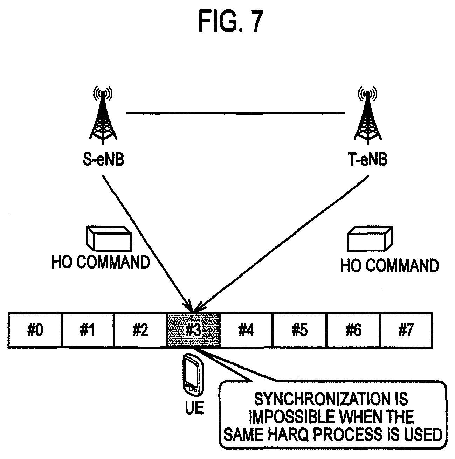

Moreover, as shown in Fig. 7, in the case where a handover source radio base station S-eNB and a handover destination radio base station T-eNB are not synchronized with each other at a TTI (Transmission Time Interval) level, if the handover source radio base station S-eNB and the handover destination radio base station T-eNB transmit "HO command" while using the same HARQ process (such as a HARQ process #3) in the handover procedure, the mobile station UE cannot properly synthesize, on a MAC (Media Access Control) layer using soft buffers, the "HO command" transmitted from the handover source radio base station S-eNB and the handover destination radio base station T-eNB.

However, the conventional LTE method does not consider the above-mentioned conditions in the MAC layer in implementing the "RRC diversity, " and therefore has a problem that it is not possible to implement the "RRC diversity" in the handover procedure between the cells under different radio base stations eNB.

The present invention has been made in view of the aforementioned problem. An object of the present invention is to provide a handover method, a radio base station, and a mobile station, which are capable of implementing "RRC diversity" in a handover procedure between cells under different radio base stations eNB, while considering conditions in a MAC layer.

A first feature of the present invention is summarized as a handover method of performing a handover of a mobile station connected to a first cell under a first radio base station to a second cell under a second radio base station, including: a step A of notifying, by the first radio base station, the second radio base station of a HARQ process; a step B of transmitting, by the first radio base station, a handover instruction signal to the mobile station by using a HARQ process different from the HARQ process notified to the second radio base station; and a step C of transmitting, by the second radio base station, a handover instruction signal to the mobile station by using the HARQ process notified by the first radio base station.

A second feature of the present invention is summarized as a radio base station operable as a first radio base station when a handover of a mobile station connected to a first cell under the first radio base station to a second cell under a second radio base station is performed, the radio base station including: a transmission unit configured to notify the second radio base station of a HARQ process. Here, the transmission unit is configured to transmit a handover instruction signal to the mobile station by using a HARQ process different from the HARQ process notified to the second radio base station.

A third feature of the present invention is summarized as a handover method of performing a handover of a mobile station connected to a first cell under a first radio base station to a second cell under a second radio base station, including the steps of: transmitting, by the first radio base station, a handover instruction signal to the mobile station by using any of a predetermined number of HARQ processes usable between the first radio base station and the mobile station; and transmitting, by the second radio base station, a handover instruction signal to the mobile station by using a special HARQ process different from the predetermined number of HARQ processes.

A fourth feature of the present invention is summarized as a radio base station operable as a second radio base station when a handover of a mobile station connected to a first cell under a first radio base station to a second cell under the second radio base station is performed, the radio base station including: a transmission unit configured to transmit a handover instruction signal to the mobile station by using a special HARQ process different from a predetermined number of HARQ processes usable between the first radio base station and the mobile station.

A fifth feature of the present invention is summarized as a mobile station. Here, the mobile station is configured, when the mobile station performs a handover from a first cell under a first radio base station to a second cell under a second radio base station, to receive a handover instruction signal from the first radio base station by using any of a predetermined number of HARQ processes usable between the mobile station and the first radio base station, and to receive a handover instruction signal from the second radio base station by using a special HARQ process different from the predetermined number of HARQ processes, and a buffer corresponding to the special HARQ process is flushed in any one of cases where a MAC layer is initialized, where a measurement report is transmitted to the first radio base station eNB, where any of MAC-ACK and RLC-ACK in response to the measurement report is received from the first radio base station, and where an upper layer activates an "RRC diversity" function.

### BRIEF DESCRIPTION OF THE DRAWINGS

[Fig. 1] Fig. 1 is a view for explaining an overall configuration of a mobile communication system according to an embodiment of the present invention.
[Fig. 2] Fig. 2 is a functional block diagram of a radio base station eNB #1/eNB #10 according to the embodiment of the present invention.
[Fig. 3] Fig. 3 is a diagram for explaining an operation of the mobile communication system according to the embodiment of the present invention.
[Fig. 4] Fig. 4 is a diagram for explaining an operation of a mobile communication system according to a first modified example of the present invention.
[Fig. 5] Fig. 5 is a view for explaining the related art.
[Fig. 6] Fig. 6 is a view for explaining the related art.
[Fig. 7] Fig. 7 is a view for explaining the related art.

### MODE FOR CARRYING OUT THE INVENTION

### (Mobile Communication System According to Embodiment of Present Invention)

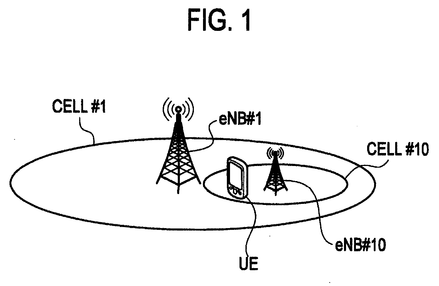

A mobile communication system according to an embodiment of the present invention will be described with reference to Fig. 1 to Fig. 3.

As shown in Fig. 1, a mobile communication system of this embodiment includes a radio base station eNB #1 which manages a cell #1, and a radio base station eNB #10 which manages a cell #10.

An area covered by the cell #1 and an area covered by the cell #10 are designed to at least partially overlap each other geographically. Here, the cell #1 and the cell #10 are cells using the same frequency.

For example, the cell #1 may be a macro cell while the cell #10 may be a small cell such as a phantom cell.

Meanwhile, the mobile communication system of this embodiment is configured to be capable of carrying out CoMP on a downlink between the cell #1 under the radio base station eNB #1 and the cell #10 under the radio base station eNB #10.

Note that this embodiment will be described on the assumption that a mobile station UE connected to the cell #1 performs a handover to the cell #10.

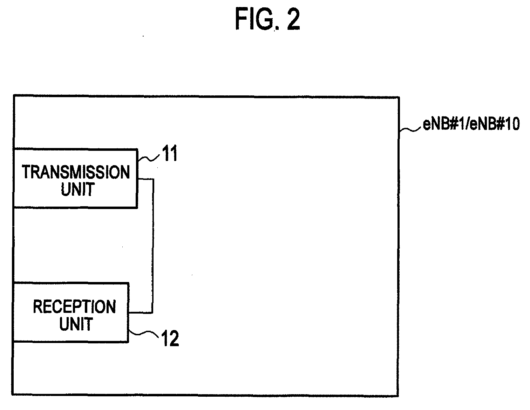

As shown in Fig. 2, the radio base station eNB of this embodiment, namely, each of the radio base stations eNB #1 and eNB #10 of this embodiment includes a transmission unit 11 and a reception unit 12.

The transmission unit 11 of the radio base station eNB #1 is configured to transmit various signals to the mobile station UE and the radio base station eNB #10. The reception unit 12 of the radio base station eNB #1 is configured to receive various signals from the mobile station UE and the radio base station eNB #10.

Meanwhile, the transmission unit 11 of the radio base station eNB #10 is configured to transmit various signals to the mobile station UE and the radio base station eNB #1. The reception unit 12 of the radio base station eNB #10 is configured to receive various signals from the mobile station UE and the radio base station eNB #1.

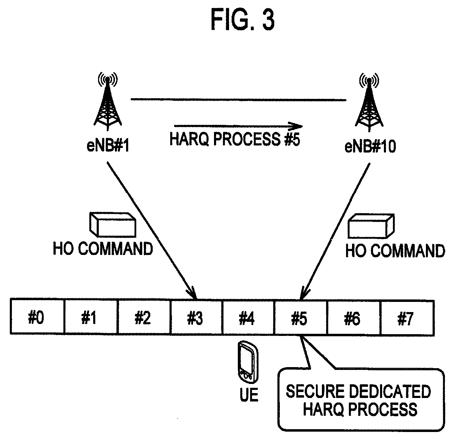

For example, as shown in Fig. 3, the transmission unit 11 of the radio base station eNB #1 is configured to notify the radio base station eNB #10 of a HARQ process (such as a HARQ process #5).

Here, the transmission unit 11 of the radio base station eNB #1 may be configured to notify of the above-mentioned HARQ process (such as the HARQ process #5) by using "HO request" and the like.

As shown in Fig. 3, the transmission unit 11 of the radio base station eNB #1 is configured to transmit the "HO command" to the mobile station UE in a MAC layer, by using a HARQ process (such as a HARQ process #3) that is different from the HARQ process (such as the HARQ process #5) notified to the radio base station eNB #10.

On the other hand, as shown in Fig. 3, the reception unit 12 of the radio base station eNB #10 is configured to receive the information from the radio base station eNB #1 which notifies of the above-mentioned HARQ process (such as the HARQ process #5).

As shown in Fig. 3, the transmission unit 12 of the radio base station eNB #10 is configured to transmit the "HO command" to the mobile station UE by using the HARQ process (such as the HARQ process #5) notified by the radio base station eNB #1.

Here, the radio base station eNB #1 may be configured to release a secured HARQ process when "HO ACK" including the "HO command" is not received from the radio base station eNB #10 even after a lapse of a predetermined time period since the transmission of "HO request" to the radio base station eNB #10, or when the radio base station eNB #10 notifies of an inability of performing a handover, by using "HO NACK" and the like.

According to the mobile communication system of this embodiment, the HARQ process being different from the HARQ process used by the radio base station eNB #1 for transmitting the "HO command" can be secured as the dedicated HARQ process for the radio base station eNB #10 to transmit the "HO command. "

### (First Modified Example)

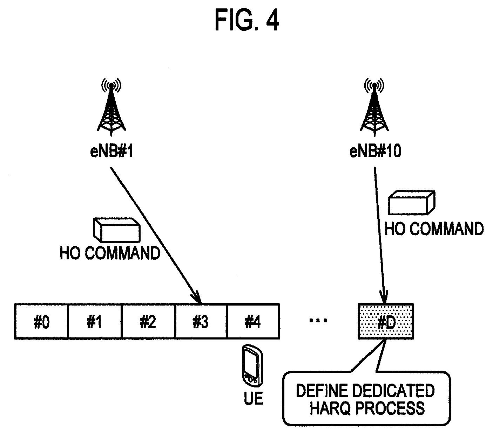

A mobile communication system according to a first modified example of the present invention will be described below with reference to Fig. 4 while focusing on different features from those of the mobile communication system according to the above-mentioned embodiment.

In the mobile communication system according to the first modified example, as shown in Fig. 4, a predetermined number (such as eight pieces) of HARQ processes (such as HARQ processes #0 to #7) are assumed to be used between the radio base station eNB #1 and the mobile station UE.

Specifically, in the mobile communication system according to the first modified example, the transmission unit 11 of the radio base station eNB #1 is configured to transmit the "HO command" to the mobile station UE in the above-described handover procedure by using any of the predetermined number (such as eight pieces) of HARQ processes (such as the HARQ processes #0 to #7) usable between the radio base station eNB #1 and the mobile station UE.

In the mobile communication system according to the first modified example, a special HARQ process (such as a HARQ process #D) for the "RRC diversity" is provided separately from the predetermined number (such as eight pieces) of HARQ processes (such as the HARQ processes #0 to #7).

Here, the transmission unit 11 of the radio base station eNB #10 is configured, when the "RRC diversity" takes place, to transmit the "HO command" to the mobile station UE in the above-described handover procedure by using the special HARQ process (such as the HARQ process #D).

Note that a buffer in the mobile station UE corresponding to the special HARQ process (such as the HARQ process #D) may be flushed when the MAC layer is initialized (when the MAC layer is reset), may be flushed when a "measurement report" is transmitted to the radio base station eNB (or MAC-ACK or RLC-ACK in response to the "measurement report" is received), or may be flushed when an upper layer activates an "RRC diversity" function.

Here, the capability of the mobile station UE or the "UE category" governs how many HARQ processes #D (or D-processes) and soft buffers used in the case of employing the HARQ processes #D are available. The mobile station UE may therefore be configured to notify the radio base station eNB #1 (or the radio base station eNB #10) of capability information, which indicates the number of the HARQ processes #D available (or the number of soft buffers available).

Based on the capability information, the radio base station eNB #1 (or the radio base station eNB #10) may be configured to determine how many HARQ processes #D should be set for the mobile station UE which transmits the capability information.

The features of the present embodiment may also be expressed as follows.

A first feature of the present embodiment is summarized as a handover method of performing a handover of a mobile station UE connected to a cell #1 (first cell) under a radio base station eNB#1 (first radio base station) to a cell #10 (second cell) under a radio base station eNB#10 (second radio base station), including: a step A of notifying, by the radio base station eNB#1, the radio base station eNB#10 of a HARQ process (such as a HARQ process #5) ; a step B of transmitting, by the radio base station eNB#1, "HO command (handover instruction signal) " to the mobile station UE by using a HARQ process (such as a HARQ process #3)different from the HARQ process (such as the HARQ process #5) notified to the radio base station eNB#10; and a step C of transmitting, by the radio base station eNB#10, "HO command" to the mobile station UE by using the HARQ process (such as the HARQ process #5) notified by the radio base station eNB#1.

According to the above-described aspect, it is possible to avoid a situation of contention between the HARQ process used by the radio base station eNB #1 for transmitting the "HO command" and the HARQ process used by the radio base station eNB #10 for transmitting the "HO command," and thereby to implement the "RRC diversity" in the handover procedure between the cells (the cell #1 and the cell #10) under the different radio base stations eNB (eNB #1 and eNB #10) while considering the conditions in the MAC layer.

In the first feature of the present embodiment, the radio base station eNB#1 may notify of the HARQ process (such as a HARQ process #5) by using "HO request (handover request signal)".

According to the above-described feature, the radio base station eNB #1 can notify the radio base station eNB #10 of the above-described HARQ process by using the existing "HO request."

A second feature of the present embodiment is summarized as a radio base station eNB operable as a radio base station eNB#1 when a handover of a mobile station UE connected to a cell #1 under the radio base station eNB#1 to a cell #10 under a radio base station eNB#10 is performed, the radio base station eNB including: a transmission unit 11 configured to notify the radio base station eNB#10 of a HARQ process. Here, the transmission unit 11 is configured to transmit "HO command" to the mobile station UE by using a HARQ process different from the HARQ process notified to the radio base station eNB#10.

According to the above-described aspect, it is possible to avoid the situation of contention between the HARQ process used by the radio base station eNB #1 for transmitting the "HO command" and the HARQ process used by the radio base station eNB #10 for transmitting the "HO command, " and thereby to implement the "RRC diversity" in the handover procedure between the cells (the cell #1 and the cell #10) under the different radio base stations eNB (eNB #1 and eNB #10) while considering the conditions in the MAC layer.

In the second feature of the present embodiment, the transmission unit 11 may be configured to notify of the HARQ process by using a "HO request."

According to the above-described feature, the radio base station eNB #1 can notify the radio base station eNB #10 of the above-described HARQ process by using the existing "HO request."

A third feature of the present embodiment is summarized as a handover method of performing a handover of a mobile station UE connected to a cell #1 under a radio base station eNB#1 to a cell #10 under a radio base station eNB#10, including the steps of: transmitting, by the radio base station eNB#1, "HO command" to the mobile station UE by using any of a predetermined number (such as eight pieces) of HARQ processes (such as HARQ processes #0 to #7) usable between the radio base station eNB#1 and the mobile station UE; and transmitting, by the radio base station eNB#10, "HO command" to the mobile station UE by using a special HARQ process (such as HARQ processes #D)different from the predetermined number (such as eight pieces) of HARQ processes (such as HARQ processes #0 to #7).

According to the above-described aspect, it is possible to avoid the situation of contention between the HARQ process used by the radio base station eNB #1 for transmitting the "HO command" and the HARQ process used by the radio base station eNB #10 for transmitting the "HO command," and thereby to implement the "RRC diversity" in the handover procedure between the cells (the cell #1 and the cell #10) under the different radio base stations eNB (eNB #1 and eNB #10) while considering the conditions in the MAC layer.

A fourth feature of the present embodiment is summarized as a radio base station eNB operable as a radio base station eNB#10 when a handover of a mobile station UE connected to a cell #1 under a radio base station eNB#1 to a cell #10 under the radio base station eNB#10 is performed, the radio base station eNB including: a transmission unit 11 configured to transmit "HO command" to the mobile station UE by using a special HARQ process different from a predetermined number of HARQ processes usable between the radio base station eNB#1 and the mobile station UE.

According to the above-described aspect, it is possible to avoid the situation of contention between the HARQ process used by the radio base station eNB #1 for transmitting the "HO command" and the HARQ process used by the radio base station eNB #10 for transmitting the "HO command," and thereby to implement the "RRC diversity" in the handover procedure between the cells (the cell #1 and the cell #10) under the different radio base stations eNB (eNB #1 and eNB #10) while considering the conditions in the MAC layer.

A fifth feature of the present embodiment is summarized as a mobile station UE. Here, the mobile station UE is configured, when the mobile station UE performs a handover from a cell #1 under a radio base station eNB#1 to a cell #10 under a radio base station eNB#10, to receive "HO command" from the radio base station eNB#1 by using any of a predetermined number (such as eight pieces) of HARQ processes usable between the mobile station UE and the radio base station eNB#1, and to receive "HO command" from the radio base station eNB#10 by using a special HARQ process (such as the HARQ process #D) different from the predetermined number of HARQ processes, and a buffer corresponding to the special HARQ process is flushed in any one of cases where a MAC layer is initialized, where a "measurement report" is transmitted to the radio base station eNB#1, where any of MAC-ACK and RLC-ACK in response to the "measurement report" is received from the radio base station eNB#1, and where an upper layer activates an "RRC diversity" function.

It should be noted that the foregoing operations of the mobile station UE and radio base stations eNB#1/eNB#10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and radio base stations eNB#1/eNB#10. Otherwise, the storage medium and the processor may be provided as discrete components inside the mobile station UE and radio base stations eNB#1/eNB#10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention. Note that the entire content of Japanese Patent Application No. 2013-099359 (filed on May 9, 2013) is incorporated by reference in the present specification.

### INDUSTRIAL APPLICABILITY

As described above, according to the present invention, it is possible to provide a handover method, a radio base station, and a mobile station, which are capable of implementing "RRC diversity" in a handover procedure between cells under different radio base stations eNB, while considering conditions in a MAC layer.

### EXPLANATION OF THE REFERENCE NUMERALS

- eNB #1/eNB #10: radio base station
- UE: mobile station
- 11: transmission unit
- 12: reception unit

## Claims

1. A handover method of performing a handover of a mobile station connected to a first cell under a first radio base station to a second cell under a second radio base station, comprising:
a step A of notifying, by the first radio base station, the second radio base station of a HARQ process;
a step B of transmitting, by the first radio base station, a handover instruction signal to the mobile station by using a HARQ process different from the HARQ process notified to the second radio base station; and
a step C of transmitting, by the second radio base station, a handover instruction signal to the mobile station by using the HARQ process notified by the first radio base station.

2. The handover method according to claim 1, wherein the first radio base station notifies of the HARQ process by using a handover request signal in the step A.

3. A radio base station operable as a first radio base station when a handover of a mobile station connected to a first cell under the first radio base station to a second cell under a second radio base station is performed, the radio base station comprising:
a transmission unit configured to notify the second radio base station of a HARQ process, wherein
the transmission unit is configured to transmit a handover instruction signal to the mobile station by using a HARQ process different from the HARQ process notified to the second radio base station.

4. The radio base station according to claim 3, wherein the transmission unit is configured to notify of the HARQ process by using a handover request signal.

5. A handover method of performing a handover of a mobile station connected to a first cell under a first radio base station to a second cell under a second radio base station, comprising the steps of:
transmitting, by the first radio base station, a handover instruction signal to the mobile station by using any of a predetermined number of HARQ processes usable between the first radio base station and the mobile station; and
transmitting, by the second radio base station, a handover instruction signal to the mobile station by using a special HARQ process different from the predetermined number of HARQ processes.

6. A radio base station operable as a second radio base station when a handover of a mobile station connected to a first cell under a first radio base station to a second cell under the second radio base station is performed, the radio base station comprising:
a transmission unit configured to transmit a handover instruction signal to the mobile station by using a special HARQ process different from a predetermined number of HARQ processes usable between the first radio base station and the mobile station.

7. A mobile station, wherein
the mobile station is configured, when the mobile station performs a handover from a first cell under a first radio base station to a second cell under a second radio base station, to receive a handover instruction signal from the first radio base station by using any of a predetermined number of HARQ processes usable between the mobile station and the first radio base station, and to receive a handover instruction signal from the second radio base station by using a special HARQ process different from the predetermined number of HARQ processes, and
a buffer corresponding to the special HARQ process is flushed in any one of cases where a MAC layer is initialized, where a measurement report is transmitted to the first radio base station eNB, where any of MAC-ACK and RLC-ACK in response to the measurement report is received from the first radio base station, and where an upper layer activates an "RRC diversity" function.
